# EUROPÄISCHE PATENTSCHRIFT

(11) **EP 2 816 243 B1**
(45) Veröffentlichungstag und Bekanntmachung des Hinweises auf die Patenterteilung: **25.04.2018**
(21) Anmeldenummer: 14002064.5
(22) Anmeldetag: 16.06.2014
(51) Int. Cl.: F16B 37/04

(54) **Befestigungselement**
Fastening element
Élément de fixation

(30) Priorität: 17.06.2013 DE 102013010036
(43) Veröffentlichungstag der Anmeldung: 24.12.2014
(73) Patentinhaber: Secura Services AG, 8404 Winterthur (CH)
(72) Erfinder: Henrich, Peter, 65830 Kriftel (DE); Kruse, Reinhard, 63571 Gelnhausen (DE)
(74) Vertreter: Patentanwälte Olbricht Buchhold Keulertz

(56) Entgegenhaltungen:
- EP-A1- 1 462 665
- EP-A2- 1 039 155

## Beschreibung

Die vorliegende Erfindung befasst sich mit einem Befestigungselement zum Befestigen von Bauteilen an Profilschienen, das eine Schließmutter, eine Spannschraube, ein Auflagerelement und ein Stützelement aufweist, wobei zwischen dem Stützelement und dem Kopf der Spannschraube ein Federelement angeordnet ist, wobei das Stützelement starr mit dem Auflagerelement verbunden ist.

Ein derartiges Befestigungselement ist aus der DE 197 52 714A1 bekannt. Das Federelement übt dabei eine Spannkraft auf die Schraube aus, so dass vor dem Anziehen bereits eine Klemmstellung des Befestigungselements in der Profilschiene erreicht werden kann, in dem die Schließmutter von unten gegen die Flanken eines Montageschlitzes gezogen wird. Um die Schließmutter in diese Position bringen zu können, kann die Schraube ggf. in Richtung der Schiene vorbelastet werden, wobei sich die Profilschiene spätestens dann durch Verdrehen der Schraube unter die seitlichen Schenkel des Schlitzes verdrehen lässt. Nach dem Loslassen liegt sie sich dann wie zuvor beschrieben, von unten an die Schenkel der Profilschiene an.

Die Lösung gemäß der DE 197 250 714A1 sieht dabei ein topfförmiges Stützelement vor, das gegenüber älteren Lösungen, wie sie z.B. aus der US 4 830 531 bekannt sind, den Vorteil hat, dass der Federweg erheblich vergrößert ist, so dass auch bei profilierten Schließmuttern und korrespondierenden Unterseiten der Schenkel ein ausreichender Federweg zur Verfügung steht, um die Schließmutter ungehindert in ihre Klemmstellung verschwenken zu können.

Problematisch bei der Konstruktion gemäß der DE 197 52 714A1 ist, dass eine Mitnahme zwischen dem Schraubengewinde und der Schließmutter unter Umständen nicht gegeben ist, weil diese Mitnahme allein durch Reibungseffekte zwischen den Gewinden bewerkstelligt werden muss. Insbesondere weil der Benutzer die Stellung der Schließmutter in der vermeintlichen Klemmstellung nicht visuell überprüfen kann, besteht die Gefahr, dass die Schließmutter nicht richtig in der Schiene verklemmt ist und bei kleiner Berührung aus dieser herausfallen kann.

Die europäische Patentanmeldung 1 039 155 A2 beschreibt ein Befestigungselement zum Befestigen von Bauelementen an Profilschienen mit einem topfartigen Bauteil, dessen Boden ein Loch und dessen oberer Rand einen Flansch aufweist, und einem rohrförmigen Bauteil, das teleskopierbar in das topfartige Bauteil eingreift und drehfest mit diesem verbunden ist. Das Befestigungselement ist derart konstruiert, dass die Schließmutter mit dem Auflageelement gedreht werden kann.

Ein Befestigungselement der eingangs genannten Art ist aus der EP 1 462 665 A1 bekannt.

Die DE 298 20 923U1 beschreibt eine Lösung, bei welcher eine speziell geformte Gewindehülse hinter die Schließmutter greift. Das Federelement ist zwischen dem Schraubenkopf und dem Auflagerelement angeordnet. Die Stellung der Schließmutter ist nicht klar erkennbar.

Die EP 604361A1 zeigt einen Befestiger, bei welchem zwischen Auflagerelement und Schließmutter eine drehstarre Verbindung vorgesehen ist. Die Klemmstellung wird durch ein elastisches Kunststoffelement bereitgehalten, die Spannschraube selbst spielt für die Vorbefestigung keine Rolle und wird erst nachträglich eingedreht, wodurch die Handhabung vor Ort etwas komplizierter ist. Auch die US 4 660 355A beschreibt eine Lösung, bei welcher die Schraube nicht in die Funktion der Vorbefestigung eingebunden ist.

Die Aufgabe der vorliegenden Erfindung besteht darin, ein Befestigungselement zu schaffen, das sich einfach und zuverlässig in eine Klemmstellung bringen lässt, wobei die Stellung der Schließmutter von außen überprüfbar sein soll.

Erfindungsgemäß wird die Aufgabe durch ein Befestigungselement der eingangs genannten Art gelöst, bei welchem eine drehstarre aber axial verschiebliche Verbindung zu der Schließmutter ausgebildet ist und die drehstarre Verbindung zwischen dem Stützelement und der Schließmutter und damit auch mit dem Auflagerelement derart ist, dass an der Drehstellung des Auflagerelements unmittelbar auch die Stellung der Schließmutter überprüft werden kann.

Die drehstarre Verbindung zwischen dem Stützelement und der Schließmutter und damit auch mit dem Auflagerelement hat den Vorteil, dass an der Drehstellung des Auflagerelements unmittelbar auch die Stellung der Schließmutter überprüft werden kann. Das Stützelement definiert gleichzeitig eine bestimmte Distanz zwischen dem Auflagerelement und der Schließmutter, so dass sich letztere in einer genau definierten Position bezüglich der Profilschiene befindet, wenn das Befestigungselement, ggf. unter Zwischenlage eines Montagelements, an der Schiene festgelegt werden soll. Durch Verdrehen des Auflagerelements kann dann die Schließmutter definiert in ihre Klemmstellung bewegt werden.

Vorzugsweise sind das Auflagerelement und das Stützelement getrennt voneinander ausgebildet und miteinander verbunden. Diese Ausführungsform hat den Vorteil, dass sich die insgesamt komplexe Ausbildung der beiden Teile auf diese Weise kostengünstiger realisieren lässt. Da das Auflagerelement bei der Benutzung auch höheren Belastungen unterliegt, weil es unter anderem Lasten abtragen muss, ist es auch zweckmäßig, das Auflagerelement aus Metall zu fertigen, während das Stützelement, das lediglich die Stellkräfte beim Einsetzen des Befestigungselements in die Schiene und Verdrehen in die Klemmstellung übertragen muss, kostengünstig aus Kunststoff gefertigt werden kann. Grundsätzlich möglich sind aber auch einstückige Varianten, die dann vorzugsweise vollständig aus Metall gefertigt sind.

Vorzugsweise ist das getrennt ausgeführte Stützelement mit dem Auflagerelement verrastet, wobei bei einer Ausbildung des Stützelementes aus Kunststoff die entsprechenden Rastnasen einfach an dem Stützelement angeformt sein können.

In einer bevorzugten Weiterbildung ist vorgesehen, dass das Stützelement topfförmig ausgebildet ist, wobei das Federlager durch einen ringförmigen Rand ausgebildet ist. Der topfförmige Abschnitt ragt dabei zwischen den Schenkeln in den Schlitz der Profilschiene, wobei er in der Regel zylindrisch ausgebildet ist und auf diese Art und Weise beispielsweise eine Schraubenfeder als Federelement aufnehmen kann. Der topfförmige Abschnitt vergrößert den Federweg weiter, so dass bei einem Komprimieren die Feder nicht allzu sehr verhärtet.

In einer noch weiteren Ausführungsform der Erfindung ist vorgesehen, dass die drehstarre Verbindung zwischen dem Stützelement und der Schließmutter durch Vorsprünge an dem Stützelement gebildet ist, die in Ausnehmungen der Schließmutter eingreifen und / oder die Schließmutter exzentrisch umgreifen. Auf diese Weise ist es möglich, die Schließmutter problemlos axial relativ zu dem Stützelement zu verlagern, während gleichzeitig eine drehstarre Verbindung hergestellt wird. Bei einer beispielsweise im Querschnitt rechteckig ausgebildeten Schließmutter kann das Stützelement diese an ihren Längsseiten mit entsprechend angeformten länglichen Vorsprüngen übergreifen, ohne dass eine besondere Formgebung der Schließmutter notwendig ist.

Im Bereich des Schraubenkopfes ist das Widerlager für das Federelement vorzugsweise durch einen am Schraubenkopf angeformten Ringflansch ausgebildet. Neben der sicheren Abstützung der Schraubenfeder bietet ein solcher Ringflansch auch die Möglichkeit, das Befestigungselement mit dem aufgesetzten Werkzeug in der Profilschiene zu verschieben, indem durch einen Axialdruck die Anlage der Schließmutter an der Unterseite der Schenkel der Profilschiene aufgehoben wird.

Das Auflagerelement ist in einer bevorzugten Ausführungsform der Erfindung an seiner Unterseite entsprechend der Ausnehmung in der Profilschiene oder einem zwischenliegenden Montageelement profiliert. Auf diese Weise findet beim Verriegeln ein Einschnappen des Auflagerelements in die entsprechende Öffnung statt, so dass der Nutzer ein gutes Gefühl dafür erhält, wann die Klemmstellung erreicht ist. Vorzugsweise sind die Ränder der Profilierung mit Schrägen versehen, die das Lösen erleichtern, wenn das Auflagerelement aus der Klemmstellung in die Entnahmestellung zurückgedreht wird.

Wie bereits erwähnt, besitzt die Schließmutter vorzugsweise einen rechteckigen Querschnitt mit einer Länge, die an die Innenbreite der Profilschiene angepasst ist. Die schmale Abmessung ermöglicht ein problemloses Einfügen in die Profilschiene durch den Schlitz, während die ausreichende Länge ein sicheres Untergreifen der Schenkel der Profilschiene seitlich des Öffnungsschlitzes ermöglicht. Die Oberseite der Schließmutter kann entsprechend den Unterseiten der Schenkel profiliert sein, wodurch in der Klemmstellung ein besonders sicherer Halt gegen seitliches Verrutschen erreicht wird.

Gegenstand der vorliegenden Erfindung ist auch ein Befestigungssystem bestehend aus einer Profilschiene mit c-förmigen Querschnitt, einem Befestigungselement nach einem der vorhergehenden Ansprüche und einem Montageelement, dass eine dem Querschnitt der Schließmutter und dem Stützelement angepasste Öffnung besitzt und zwischen dem Auflagerelement und der Profilschiene angeordnet ist.

Nachfolgend wird anhand der beigefügten Zeichnungen näher auf ein Ausführungsbeispiel der Erfindung eingegangen. Es zeigen:
- Fig. 1: ein Explosionsschaubild eines Befestigungselements;

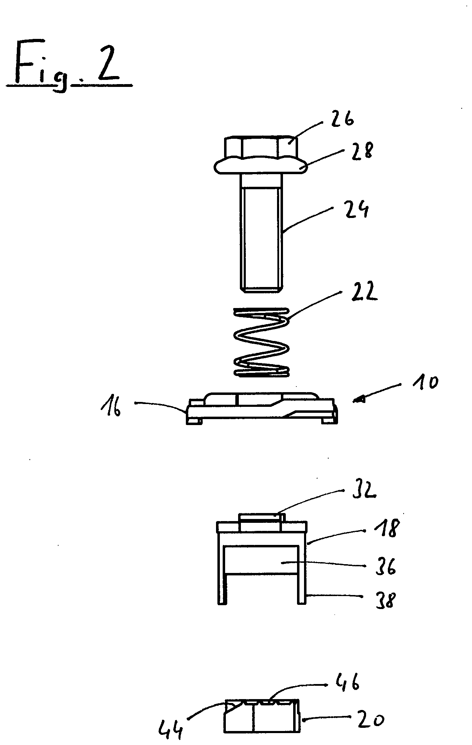

- Fig. 2: die Einzelteile des Befestigungselements in einer Seitenansicht;
- Fig. 3: eine Seitenansicht des montierten Befestigungselements;
- Fig. 4: eine um 90° gedrehte Seitenansicht des Befestigungselements;
- Fig. 5: eine Ansicht des Befestigungselements von unten;
- Fig. 6: eine Schrägansicht einer Profilschiene mit einem Befestigungselement und einem zu verankerndem Montageelement;
- Fig. 7: die Profilschiene und das Montageelement mit eingesetztem Befestigungselement;
- Fig. 8: die Profilschiene mit einem in die Klemmstellung verdrehten Befestigungselement;
- Fig. 9: eine Seitenansicht der Profilschiene mit dem Befestigungselement in der Klemmstellung.

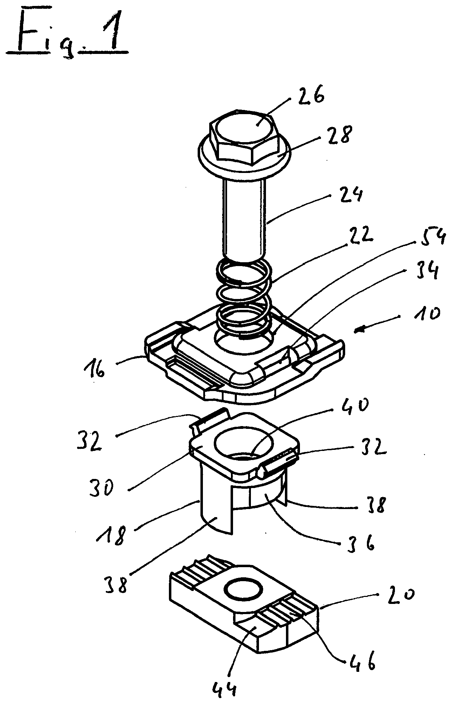

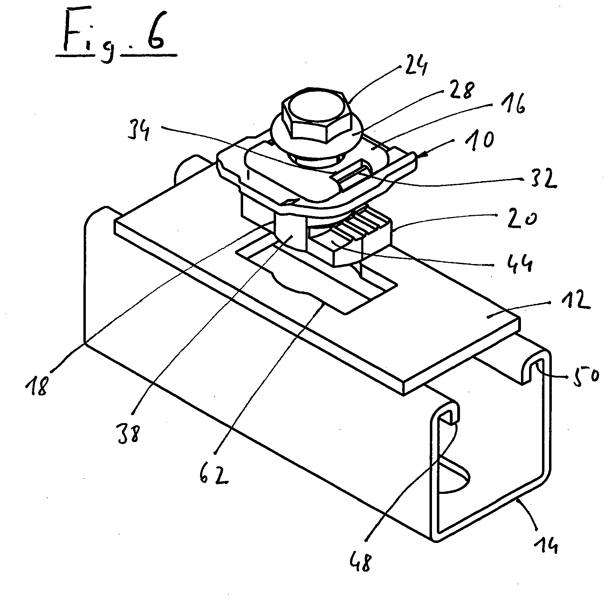

In Fig. 1 sind die Einzelteile eines Befestigungselements 10 gezeigt, das zum Befestigen von Montageelementen 12 (siehe Fig. 6) an Profilschienen 14 dient. Ein solches Befestigungselement 10 besteht im dargestellten Ausführungsbeispiel aus einem Auflagerelement 16, einem Stützelement 18, einer Schließmutter 20, einer Schraubenfeder 22 und einer Spannschraube 24 mit einem im dargestellten Ausführungsbeispiel an einen Schraubenkopf 26 angeformten Ringflansch 28. Die Nutzung einer Spannschraube 24 ohne angeformten Ringflansch 28 ist ebenfalls möglich. Des Weiteren kann zur Abstüzung der Feder auch eine separate Scheibe genutzt werden.

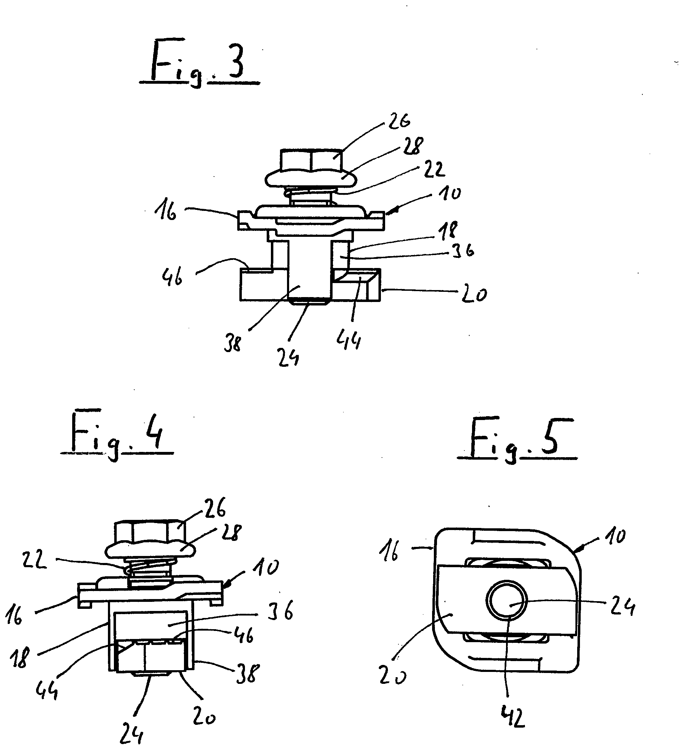

Das Stützelement 18 besitzt an seiner Oberseite eine flächige Auflage 30, die sich nach der Montage an der Unterseite des Auflagerelementes 16 anliegt. Seitlich an das aus Kunststoff bestehende Stützelement 18 angeformte Rastnasen 32 schnappen dabei zur Verankerung in entsprechend ausgeformte Schlitze 34 des aus Metall bestehenden Auflagerelements 16 ein. Unterhalb der flächigen Auflage 30 schließt sich ein zylindrischer, topfförmiger Bereich 36 des Stützelements 28 an, dessen Länge einen Mindestabstand der Schließmutter 20 zum Auflagerelement 16 definiert. Das Stützelement 18 besitzt weiterhin zwei seitliche Vorsprünge 38, die die Schließmutter 20 an ihren Schmalseiten umgreifen (siehe Fig. 3 und 4) und diese damit drehstarr bezüglich des Stützelements 28 und damit auch des Auflagerelements 16 halten. Gleichzeitig ist eine axiale Verschieblichkeit der Schließmutter 20 zwischen den beiden Vorsprüngen 38 ermöglicht.

Im vormontierten Zustand des Befestigungselements 10 der in Fig. 3 bis 5 veranschaulicht ist, ist die Spannschraube 24 in das Innengewinde der Schließmutter 20 eingedreht. Die Schraubenfeder 22 sitzt in diesem Zustand, in welchem zwischen dem Ringflansch 28 am Schraubenkopf 26 und dem Auflagerelement ein gewisser Abstand verbleibt, unter leichter Vorspannung zwischen dem Ringflansch 28 und einem Ringflansch 40, der auf der Innenseite des topfförmigen Bereiches 36 des Stützelements 18 eingespannt ist. Der Ringflansch 40 ist entsprechend mit einer Durchgangsbohrung für die Spannschraube 24 versehen. Die Schraubenfeder 22 drückt über den Ringflansch 28 die Spannschraube 24 weg von dem Auflagerelement 16, so dass sich die Schließmutter 20 unter der Wirkung der Feder von unten an das Ende des topfförmigen Bereiches 36 anlegt. Um ein Auseinanderfallen des montierten Befestigungselements 10 zu verhindern, kann die Spannschraube 24 im Bereich ihrer äußersten Gewindegänge am Schaftende 42 blockiert sein, beispielsweise durch plastische Verformung des Schaftendes 42, durch einen geeigneten Klebstoff oder durch einen Schweißpunkt. Selbstverständlich darf aber nur der Gewindegang der Spannschraube 24 blockiert sein, damit die freie Drehbarkeit relativ zur Schließmutter 20 gegeben bleibt, um das Befestigungselement letzten Endes zu Montagezwecken fest anziehen zu können.

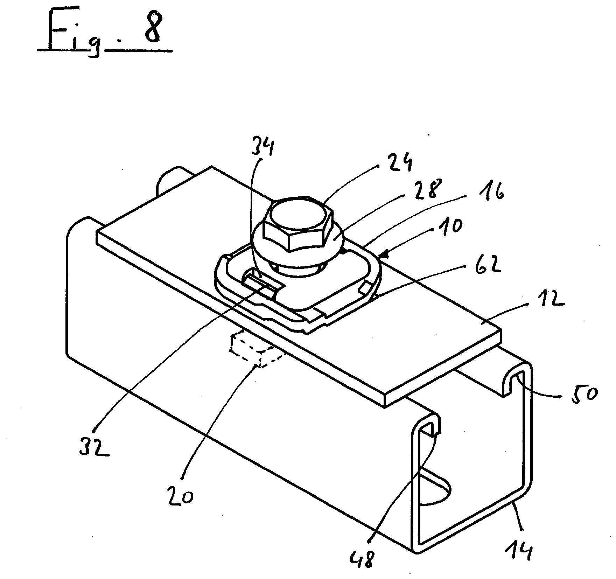

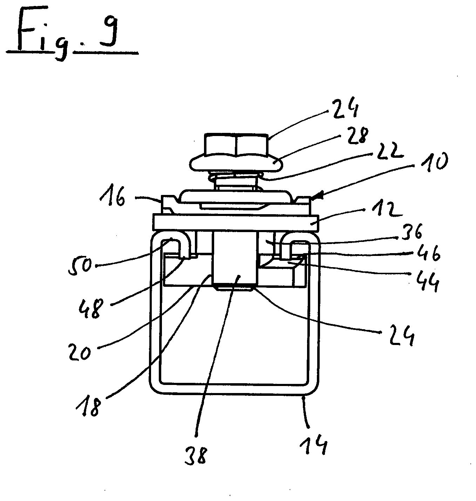

Die Schließmutter 20 (siehe Fig. 1), besitzt eine Eindrehschräge 44, die das Erreichen einer Klemmstellung vereinfacht, worauf später noch näher eingegangen wird. Eine Profilierung 46 an der Oberseite der Schließmutter dient dazu, mit einer entsprechenden Profilierung an Enden 48 (siehe Fig. 6 bis 9) der umgebogenen Schenkel 50 der Profilschiene 14 zusammen zu wirken, so dass ein Verrutschen im montierten Zustand in der Klemmstellung (siehe Fig. 8 und 9) weitestgehend vermieden werden kann.

Das Auflagerelement 16 besitzt eine Durchgangsbohrung 54, die einen ausreichend großen Durchmesser besitzt, damit auch die Schraubenfeder 22 durch diese Durchgangsbohrung 54 hindurch gesteckt werden kann. Andererseits ist der Durchmesser dieser Bohrung 54 kleiner als der Ringflansch 28 am Schraubenkopf 26, so dass das Auflagerelement 16 beim Anziehen der Spannschraube 24 gegen das Montageelement 12 verspannt werden kann. An der Unterseite des Auflagerelements 16 ist ein profilierter Vorsprung 58 (siehe Fig. 3) vorgesehen, dessen Breite der Schlitzbreite der Profilschiene 14 angepasst ist. Der Vorsprung 58 ist in seinem Verlauf um 90° bezüglich der Schließmutter 20 verdreht ausgerichtet, so dass in der Klemmstellung nach Fig. 8 und 9 der Vorsprung 58 parallel zum Schlitz der Profilschiene 14 liegt. Eine Anschrägung 60 am Rande des Vorsprunges 58 erlaubt es, das Befestigungselement ggf. nach Niederdrücken der Schraube 24 und entsprechendem Abheben der Schließmutter von den Enden 48 der Schenkel 50 wieder zu lösen, indem das Auflagerelement 16 um 90° zurückgedreht wird.

Die Montage eines Montageelements 12, das hier vereinfacht als Blechstreifen dargestellt ist, grundsätzlich aber jede gewünschte Formgebung besitzen kann, beispielsweise als Montagewinkel ausgebildet sein kann, wird in Fig. 6 bis 8 veranschaulicht. Das Montageelement 12 besitzt eine schlüssellochartige Öffnung 62, deren Öffnungsquerschnitt dem Querschnitt der Schließmutter 20 und den beiden diese seitlich umfassenden Vorsprüngen 38 des Stützelements 18 angepasst ist. Auf diese Weise lässt sich das Befestigungselement 10 einfach durch diese Schlüssellochöffnung 62 einfügen, wodurch die Schließmutter 20 in das Innere der Profilschiene 14 gelangt. Die Länge des topfförmigen Bereiches 16 ist so gewählt, dass die Enden der Schrägen 44 der Schließmutter 22 dann unterhalb der Enden 48 der Schenkel 50 der Profilschiene 14 liegen, während die Profilierungen 46 geringfügig oberhalb dieses Niveaus liegen. Eine Verklemmung ist aber auch möglich, wenn die Schrägen 44 oberhalb der Enden liegen sollten, beispielsweise weil ein unvorhergesehen dickes Montageelement 12 zum Einsatz kommt, da der Verbund aus Spannschraube 24 und Schließmutter 20 gegenüber dem Stützelement 18 gegen die Wirkung der Schraubenfeder 22 axial verlagerbar ist.

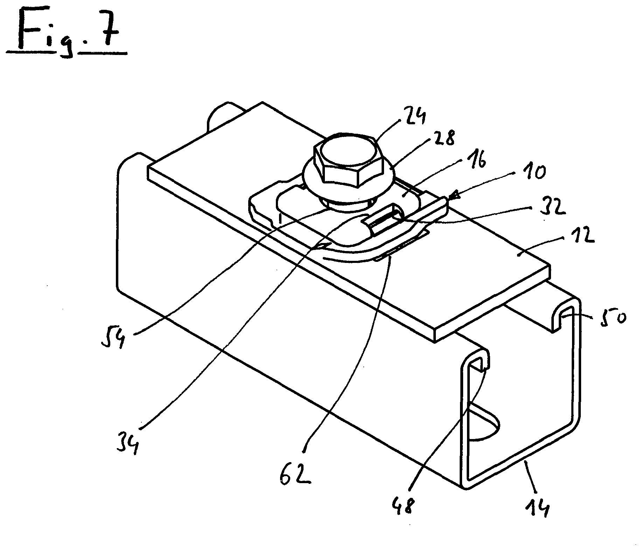

Der Übergang von der in Fig. 7 gezeigten Einsetzstellung in die in Fig. 8 gezeigte Klemmstellung erfolgt dann durch einfaches Verdrehen des Auflagerelements 16 wobei über das Stützelement 18 mit seinen Vorsprüngen 38 eine drehstarre Mitnahme der Schließmutter 20 erfolgt. Da während des Verdrehens die Schließmutter sich von der Anlage an dem topfförmigen Bereich 36 abhebt, zieht schließlich die Schraubenfeder 22 die Profilierungen 46 beim Erreichen der Endstellung gemäß Fig. 8 von unten gegen die profilierten Enden 48 der Schenkel 50 der Profilschiene 14. Durch die Lage des Auflagerelements 16 ist für den Bediener sofort erkennbar, dass die drehstarr mit diesem Auflagerelement verbundene Schließmutter 20 ihre Klemmstellung eingenommen hat. Eine undefinierte Lage der Schließmutter in der Profilschiene 14 wird damit sicher vermieden.

Nach der Vormontage in der in Fig. 8 gezeigten Klemmstellung kann abschließend die Spannschraube 24 mit einem geeigneten Werkzeug fest angezogen werden, wobei der Ringflansch 28 am Schraubenkopf über das Auflagerelement 16 das Montageelement 12 mit der Profilschiene 14 verspannt. Sollte das Befestigungselement 10 aus der in Fig. 8 gezeigten Klemmstellung noch einmal gelöst werden müssen, kann beispielsweise durch das Ansetzen eines Werkzeuges die Schraube geringfügig eingedrückt werden, wodurch sich die Schließmutter 20 von den Schenkelenden 48 abhebt, so dass das Auflagerelement 16 vereinfacht durch die Anschrägung 60 in die in Fig. 7 gezeigte Aufsetzstellung zurückgedreht werden kann.

## Patentansprüche

1. Befestigungselement zum Befestigen von Bauelementen an Profilschienen (14), das eine Schließmutter (20), eine Spannschraube (24), ein Auflagerelement (16) und ein Stützelement (18) aufweist, wobei zwischen dem Stützelement (18) und dem Kopf der Spannschraube (24) ein Federelement (22) vorgesehen ist, wobei das Stützelement (18) starr mit dem Auflagerelement (16) verbunden ist, **dadurch gekennzeichnet, dass** eine drehstarre, aber axial verschiebliche Verbindung zwischen dem Stützelement (18) und der Schließmutter (20) ausgebildet ist und die drehstarre Verbindung zwischen dem Stützelement und der Schließmutter und damit auch mit dem Auflagerelement derart ist, dass an der Drehstellung des Auflagerelements unmittelbar auch die Stellung der Schließmutter überprüft werden kann.

2. Befestigungselement nach Anspruch 1, **dadurch gekennzeichnet, dass** das Auflagerelement (16) und das Stützelement (18) getrennt voneinander ausgebildet und aneinander befestigt sind.

3. Befestigungselement nach Anspruch 2, **dadurch gekennzeichnet, dass** das Auflagerelement (16) aus Metall besteht.

4. Befestigungselement nach Anspruch 2 oder 3, **dadurch gekennzeichnet, dass** das Stützelement (18) aus Kunststoff besteht.

5. Befestigungselement nach einem der Ansprüche 2 bis 4, **dadurch gekennzeichnet, dass** das Stützelement (18) mit dem Auflagerelement (16) verrastet ist.

6. Befestigungselement nach einem der vorhergehenden Ansprüche, **dadurch gekennzeichnet, dass** das Stützelement (18) topfförmig ausgebildet ist, wobei ein Federlager (40) durch einen ringförmigen Rand auf der Innenseite des topfförmigen Bereiches (36) ausgebildet ist.

7. Befestigungselement nach einem der vorhergehenden Ansprüche, **dadurch gekennzeichnet, dass** die drehstarre Verbindung zwischen dem Stützelement (18) und der Schließmutter (20) durch Vorsprünge (38) an dem Stützelement (18) ausgebildet ist, die in Ausnehmungen der Schließmutter eingreifen und/oder die Schließmutter (20) exzentrisch umgreifen.

8. Befestigungselement nach einem der vorhergehenden Ansprüche, **dadurch gekennzeichnet, dass** ein zweites Widerlager (28) für das Federelement (22) am Schraubenkopf durch einen dort angeformten Ringflansch (28) ausgebildet ist.

9. Befestigungselement nach einem der vorhergehenden Ansprüche, **dadurch gekennzeichnet, dass** das Auflagerelement (16) an seiner Unterseite entsprechend einer Ausnehmung in der Profilschiene (14) oder einem zwischenliegenden Montageelement (12) einen profilierten Vorsprung (58) besitzt.

10. Befestigungselement nach Anspruch 9, **dadurch gekennzeichnet, dass** Ränder des profilierten Vorsprungs (58) mit Schrägen (60) versehen sind, die das Lösen erleichtern.

11. Befestigungselement nach einem der vorhergehenden Ansprüche, **dadurch gekennzeichnet, dass** die Schließmutter (20) einen rechteckförmigen Querschnitt mit einer Länge besitzt, die der Innengeometrie der Profilschiene (14) angepasst ist.

12. Befestigungssystem bestehend aus einer Profilschiene (14) mit c-förmigem Querschnitt, einem Befestigungselement (10) nach einem der vorhergehenden Ansprüche und einem Montageelement (12), das ein dem Querschnitt der Schließmutter (20) und dem Stützelement (18) angepasste Öffnung (62) besitzt und zwischen dem Auflagerelement (16) und der Profilschiene (14) angeordnet ist.

## Claims

1. Fastening element for fastening component parts to profile rails (14), comprising a lock nut (20), a clamping screw (24), a bearing element (16) and a supporting element (18), wherein a spring element (22) is provided between the supporting element (18) and the head of the clamping screw (24), wherein the supporting element (18) is rigidly connected to the bearing element (16), **characterised in that** a torsionally rigid but axially movable connection between the supporting element (18) and the lock nut (20) is formed and the torsionally rigid connection between the supporting element and the lock nut and therefore also the bearing element is such that at the rotary position of the bearing element also the position of the lock nut can be directly checked.

2. Fastening element according to claim 1, **characterised in that** the bearing element (16) and the supporting element (18) are formed separately and are fastened to one another.

3. Fastening element according to claim 2, **characterised in that** the bearing element (16) is made of metal.

4. Fastening element according to claim 2 or 3, **characterised in that** the supporting element (18) is made of plastic.

5. Fastening element according to any of claims 2 to 4, **characterised in that** the supporting element (18) is locked with the bearing element (16).

6. Fastening element according to any of the preceding claims, **characterised in that** the supporting element (18) has a pot-shaped configuration, wherein a spring bearing (40) is formed by a ring-shaped edge on the inner side of the pot-shaped area (36).

7. Fastening element according to any of the preceding claims, **characterised in that** the torsionally rigid connection between the supporting element (18) and the lock nut (20) is formed by projections (38) on the supporting element (18) engaging in recesses of the lock nut and/or eccentrically surrounding the lock nut (20).

8. Fastening element according to any of the preceding claims, **characterised in that** a second abutment (28) is formed for the spring element (22) at the screw head by a ring flange (28) formed on the screw head.

9. Fastening element according to any of the preceding claims, **characterised in that** the bearing element (16) comprises a profiled projection (58) at its bottom side corresponding to a recess in the profile rail (14) or an intermediate mounting element (12).

10. Fastening element according to claim 9, **characterised in that** the edges of the profiled projection (58) have inclinations (60) which facilitate detachment.

11. Fastening element according to any of the preceding claims, **characterised in that** the lock nut (20) has a rectangular cross-section with a length that is matched to the inner geometry of the profile rail (14).

12. Fastening system comprising a profile rail (14) with a c-shaped cross-section, a fastening element (10) according to any of the preceding claims and a mounting element (12) having an opening (62) that is matched to the cross-section of the lock nut (20) and the supporting element (18) and is arranged between the bearing element (16) and the profile rail (14).

## Revendications

1. Élément de fixation pour la fixation des composants sur des rails profilés (14) qui présente un écrou de fermeture (20), une vis de serrage (24), un élément de support (16) et un élément d'appui (18), dans lequel entre l'élément d'appui (18) et la tête de la vis de serrage (24) un élément de ressort (22) est prévu, dans lequel l'élément d'appui (18) est raccordé rigidement à l'élément de support (16), **caractérisé en ce qu'**un raccordement solidaire en rotation mais axialement mobile entre l'élément d'appui (18) et l'écrou de fermeture (20) est réalisé et le raccordement solidaire en rotation entre l'élément d'appui et l'écrou de fermeture et ainsi aussi avec l'élément d'appui est tel que sur la position de rotation de l'élément de support la position de l'écrou de fermeture peut aussi être vérifiée directement.

2. Élément de fixation selon la revendication 1, **caractérisé en ce que** l'élément de support (16) et l'élément d'appui (18) sont réalisés séparément l'un de l'autre et sont fixés l'un à l'autre.

3. Élément de fixation selon la revendication 2, **caractérisé en ce que** l'élément de support (16) se compose de métal.

4. Élément de fixation selon la revendication 2 ou 3, **caractérisé en ce que** l'élément d'appui (18) se compose de matière plastique.

5. Élément de fixation selon l'une quelconque des revendications 2 à 4, **caractérisé en ce que** l'élément d'appui (18) est encliqueté avec l'élément de support (16).

6. Élément de fixation selon l'une quelconque des revendications précédentes, **caractérisé en ce que** l'élément d'appui (18) est réalisé en forme de pot, dans lequel un palier de ressort (40) est réalisé par un bord annulaire sur le côté intérieur de la zone en forme de pot (36).

7. Élément de fixation selon l'une quelconque des revendications précédentes, **caractérisé en ce que** le raccordement solidaire en rotation entre l'élément d'appui (18) et l'écrou de fermeture (20) est réalisé par des saillies (38) sur l'élément d'appui (18) qui viennent en prise dans des évidements de l'écrou de fermeture et/ou entourent de manière excentrée l'écrou de fermeture (20).

8. Élément de fixation selon l'une quelconque des revendications précédentes, **caractérisé en ce qu'**un second contre-palier (28) pour l'élément de ressort (22) est réalisé sur la tête de vis par une bride annulaire (28) qui y est formée.

9. Élément de fixation selon l'une quelconque des revendications précédentes, **caractérisé en ce que** l'élément de support (16) possède sur son côté inférieur correspondant à un évidement dans le rail profilé (14) ou un élément de montage (12) intermédiaire une saillie profilée (58).

10. Élément de fixation selon la revendication 9, **caractérisé en ce que** des bords de la saillie profilée (58) sont pourvus de biais (60) qui facilitent le détachement.

11. Élément de fixation selon l'une quelconque des revendications précédentes, **caractérisé en ce que** l'écrou de fermeture (20) possède une section transversale rectangulaire avec une longueur qui est adaptée à la géométrie intérieure du rail profilé (14).

12. Système de fixation se composant d'un rail profilé (14) avec une section transversale en forme de c, un élément de fixation (10) selon l'une quelconque des revendications précédentes et un élément de montage (12) qui possède une ouverture (62) adaptée à la section transversale de l'écrou de fermeture (20) et l'élément d'appui (18) et est disposé entre l'élément de support (16) et le rail profilé (14).
